# FASCICULE DE BREVET EUROPEEN

(11) **EP 2 300 531 B1**
(45) Date de publication et mention de la délivrance du brevet: **28.11.2012**
(21) Numéro de dépôt: 09793890.6
(22) Date de dépôt: 10.07.2009
(51) Int. Cl.: B60B 21/06, C08L 23/20, C08L 53/00

(54) **DISPOSITIF D'ETANCHEITE ET PROCEDE DE MISE EN PLACE DUDIT DISPOSITIF SUR UNE JANTE**
VERSCHLUSSVORRICHTUNG UND VERFAHREN ZUR PLATZIERUNG DIESER VORRICHTUNG AUF EINER FELGE
SEALING DEVICE AND PROCESS FOR PLACING SAID DEVICE ON A RIM

(30) Priorité: 11.07.2008 FR 0854754
(43) Date de publication de la demande: 30.03.2011
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: ABAD, Vincent, F-63400 Chamalières (FR); BERNADOT, Patrick, F-63540 Romagnat (FR); CUSTODERO, Emmanuel, F-63400 Chamalières (FR)
(74) Mandataire: Le Cam, Stéphane Georges Elie
(86) Numéro de dépôt international: PCT/EP2009/005005
(87) Numéro de publication internationale: WO 2010/003679

(56) Documents cités:
- EP-A- 1 674 542
- WO-A-2005/017013
- FR-A- 2 910 382
- FR-A- 2 910 478
- US-A1- 2004 031 550

## Description

L'invention concerne un dispositif d'étanchéité pour une jante prévue pour recevoir un pneumatique devant fonctionner sans chambre à air, c'est-à-dire un pneumatique de type « tubeless » et un procédé pour la mise en place du dispositif d'étanchéité sur la jante. L'invention vise également un ensemble monté constitué d'une roue comportant une telle jante associée au dispositif d'étanchéité et d'un pneumatique tubeless.

L'invention vise plus particulièrement une jante non étanche prévue à l'origine pour recevoir un pneumatique prévu pour être monté avec une chambre à air, que l'on souhaite rendre étanche pour recevoir un pneumatique de type « tubeless » (montage sans chambre à air). L'invention s'applique toutefois également à une jante étanche sur laquelle on souhaiterait monter par exemple un pneumatique à zone basse peu ou pas étanche.

Bien que non limité à ce type d'applications, l'invention sera plus particulièrement décrite en référence à une jante non étanche pour une roue à rayons pour bicyclette.

Les roues de bicyclette sont le plus souvent constituées d'une jante reliée à un moyeu par des rayons. Ces rayons sont fixés à la jante par vissage d'écrous, ces écrous étant accessible depuis la surface radialement extérieure de la jante pour autoriser des réglages de tension des rayons. La jante comporte donc des orifices répartis sur sa périphérie pour autoriser la fixation des têtes de rayons qui une fois en place n'assure pas l'étanchéité desdits orifices.

Lorsque la roue est destinée à être associée à un pneumatique et une chambre à air, la non étanchéité de la surface radialement extérieure de la jante ne pose aucun problème en mode de roulage non dégradé. La présence des têtes de rayons où des écrous de serrage nécessite toutefois la présente d'un ruban en fond de jante pour protéger la chambre à air lors de frottements ; les têtes de rayons ou les écrous pourraient dans le cas contraire provoquer une déchirure de la chambre à air.

Il est par ailleurs connu de réaliser des ensembles montés de type tubeless pour bicyclettes. Il a déjà été décrit, dans la demande de brevet EP 0 893 280 une jante de type tubeless. Ce type de jante permet de réaliser des montages de type tubeless qui présentent différents avantages ; tout d'abord, ils permettent de s'affranchir de la chambre à air, ce qui conduit à des gains en coût, en montage et en poids. Par ailleurs, l'absence de chambre à air permet de rendre l'ensemble monté moins sensible aux crevaisons par pincement ou par perforation.

Par contre, les coûts de fabrication de telles jantes sont beaucoup plus importants ce qui limite leur diffusion.

Des solutions intermédiaires se sont développées pour permettre de réaliser des ensembles montés de type tubeless à coût réduit. De telles solutions ont par exemple été décrites dans les documents US 4,108,232 et US 2005/0189813. Ces documents décrivent des dispositifs d'étanchéité prévus pour pouvoir être installés manuellement et qui consistent en une bande annulaire (ou « flap ») qui vient se loger au fond d'une jante et ainsi assurer l'étanchéité de ladite jante. De tels dispositifs sont peu onéreux et peuvent donc permettre la réalisation d'ensemble monté pour vélo de type tubeless en utilisant des jantes dites « tube type » et donc meilleur marché que les jantes tubeless évoquées précédemment.

Par contre, il s'avère que les différents dispositifs existants sont délicats à mettre en place notamment pour des raisons de centrage complexe qui peut conduire à une étanchéité imparfaite. Même pour un utilisateur expérimenté, ces solutions prévues pour transformer une jante tube type en jante tubeless restent très difficiles à mettre en oeuvre et ne sont donc que peu utilisées. En outre, les propriétés de ces bandes annulaires et notamment leur rigidité conduisent, lorsqu'elles ont pu être mises en place, à des microfuites dès lors que l'état de surface des jantes présente de légers reliefs tels que des soudures ou autres aspérités.

Selon l'invention, on entend par « axiale », une direction parallèle à l'axe de rotation de la jante et par « radiale » une direction coupant l'axe de rotation de la jante et perpendiculaire à celui-ci. L'axe de rotation de la jante est l'axe autour duquel la jante tourne en utilisation normale. Le plan médian circonférentiel est un plan perpendiculaire à l'axe de rotation de la jante et qui divise la jante en deux moitiés. Un plan radial ou méridien est un plan qui contient l'axe de rotation de la jante.

Les inventeurs se sont ainsi donnés pour mission de permettre la réalisation d'une jante notamment pour une roue non étanche, pouvant être associée à un pneumatique de type tubeless pour former un ensemble monté sans chambre à air, dont le coût est modéré et donc la réalisation est simple de mise en oeuvre.

Ce but a été atteint selon l'invention par un dispositif d'étanchéité formant une bande annulaire destiné à être associé à une jante pour une roue, prévue pour recevoir un pneumatique, ladite jante étant constituée d'un fond de jante prolongé par deux ailes, pouvant comporter des crochets, ledit dispositif étant destiné à être mis en place pour couvrir au moins le fond de jante, la bande annulaire comprenant au moins une couche d'un matériau élastomérique comportant au moins un élastomère thermoplastique copolymère à blocs polystyrène et polyisobutylène (ci-après aussi dénommé "copolymère blocs" ou "élastomère blocs"), et une huile polybutène.

Un tel copolymère blocs présente l'avantage majeur, en raison de sa nature thermoplastique, de pouvoir être travaillé tel quel à l'état fondu (liquide), et par conséquent d'offrir une possibilité de mise en oeuvre simplifiée, tandis que l'ajout de l'huile polybutène permet un abaissement du module et une augmentation du tack, sans pénalisation significative de l'étanchéité.

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par élastomère thermoplastique copolymère à blocs polystyrène et polyisobutylène (ou ci-après "copolymère blocs" ou "élastomère blocs"), doit être entendu tout copolymère thermoplastique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs (par exemple polyéthylène et/ou polypropylène) et/ou d'autres unités monomères (par exemple des unités insaturées telles que diéniques).

Préférentiellement, un tel copolymère blocs est un copolymère tribloc styrène/isobutylène/ styrène (en abrégé "SIBS").

Par élastomère ou copolymère SIBS on entend dans la présente demande, par définition, tout élastomère tribloc styrène/ isobutylène/ styrène dans lequel le bloc central polyisobutylène peut être interrompu ou non par une ou plusieurs unités insaturées, en particulier une ou plusieurs unités diéniques telles qu'isopréniques, éventuellement halogénées.

L'élastomère blocs tel que SIBS ci-dessus fait partie, de manière connue, de la famille des élastomères thermoplastiques (en abrégé "TPE"), plus précisément des élastomères thermoplastiques styréniques (en abrégé "TPS").

On rappellera ici que les élastomères TPS se présentent généralement sous la forme de copolymères blocs à base de styrène. De structure intermédiaire entre polymères thermoplastiques et élastomères, ils sont constitués de séquences rigides polystyrène reliées par des séquences souples élastomère, par exemple polybutadiène, polyisoprène, poly(éthylène/butylène), ou encore polyisobutylène dans le cas par exemple de l'élastomère blocs tel que SIBS. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple styrène et isobutylène pour le SIBS).

Selon un mode de réalisation préférentiel de l'invention, le taux pondéral de styrène, dans le copolymère blocs tel que SIBS, est compris entre 5% et 50%. En dessous du minimum indiqué, le caractère thermoplastique de l'élastomère blocs risque de diminuer de manière sensible tandis qu'au-dessus du maximum préconisé, l'élasticité de la couche étanche peut être affectée. Pour ces raisons, le taux de styrène est plus préférentiellement compris entre 10 et 40%, en particulier entre 10 et 30%.

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p-*méthylstyrène, tert-butylstyrène) les chlorostyrènes (par exemple monochlorostyrène, dichlorostyrène).

On préfère que la température de transition vitreuse (Tg, mesurée selon ASTM D3418) de l'élastomère blocs soit inférieure à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg de l'élastomère blocs est plus préférentiellement encore inférieure à - 50°C.

La masse moléculaire moyenne en nombre (notée Mn) de l'élastomère blocs est préférentiellement comprise entre 30 000 et 500 000 g/mol, plus préférentiellement comprise entre 40 000 et 400 000 g/mol. En dessous des minima indiqués, la cohésion entre les chaînes d'élastomère blocs, notamment en raison de sa dilution par l'huile d'extension polybutène, risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) de l'élastomère blocs est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère blocs est de préférence inférieur à 3 ; plus préférentiellement Ip est inférieur à 2.

L'élastomère blocs, étendu avec l'huile polybutène, peut constituer à lui seul la couche élastomère étanche aux gaz ou bien être associé, dans cette couche élastomère, à d'autres élastomères.

Si d'éventuels autres élastomères sont utilisés dans cette composition, l'élastomère blocs constitue l'élastomère majoritaire en poids ; il représente alors de préférence plus de 50%, plus préférentiellement plus de 70% en poids de l'ensemble des élastomères présents dans la composition ou couche élastomère. De tels élastomères complémentaires, minoritaires en poids, pourraient être par exemple des élastomères diéniques tels que du caoutchouc naturel ou un polyisoprène synthétique, un caoutchouc butyl ou des élastomères thermoplastiques styréniques (TPS) autres qu'un élastomère blocs tel que SIBS, dans la limite de la compatibilité de leurs microstructures.

A titre d'élastomère TPS autre qu'un élastomère blocs tel que SIBS, utilisable en complément de ce dernier, peut être cité notamment un élastomère TPS choisi dans le groupe constitué par les copolymères blocs styrène/ butadiène/ styrène, les copolymères blocs styrène/ isoprène/ styrène, les copolymères blocs styrène/ isoprène/ butadiène/ styrène, les copolymères blocs styrène/ éthylène/ butylène/ styrène, les copolymères blocs styrène/éthylène/ propylène/ styrène, les copolymères blocs styrène/ éthylène/ éthylène/ propylène/styrène et les mélanges de ces copolymères. Plus préférentiellement, ledit élastomère TPS complémentaire éventuel est choisi dans le groupe constitué par les copolymères blocs styrène/ éthylène/ butylène/ styrène, les copolymères blocs styrène/ éthylène/ propylène/styrène et les mélanges de ces copolymères.

Toutefois, selon un mode de réalisation préférentiel, l'élastomère blocs tel que SIBS est le seul élastomère, et le seul élastomère thermoplastique présent dans la composition ou couche élastomère étanche aux gaz.

Les élastomères blocs tel que SIBS peuvent être mis en oeuvre de façon classique pour des TPE, par extrusion ou moulage, par exemple à partir d'une matière première disponible sous la forme de billes ou de granulés.

Les élastomères SIBS par exemple sont disponibles commercialement, vendus par exemple par la société KANEKA sous la dénomination "SIBSTAR" (e.g. "Sibstar 102T", "Sibstar 103T" ou "Sibstar 073T"). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPE, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146).

On utilise conformément à l'invention des huiles polybutènes, préférentiellement des huiles polyisobutylènes, qui ont démontré le meilleur compromis de propriétés comparativement aux autres huiles testées, notamment à des huiles conventionnelles du type paraffiniques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B 12").

La masse moléculaire moyenne en nombre (Mn) de l'huile polybutène est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées ne diminuent pas suffisamment le module.

La masse moléculaire moyenne en nombre (Mn) de l'huile polybutène est déterminée par SEC, l'échantillon étant préalablement solubilisé dans du tétrahydrofuranne à une concentration d'environ 1 g/l; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

On préfère que le taux d'huile polybutène soit supérieur à 5 pce, de préférence compris entre 5 et 100 pce (parties en poids pour cent parties d'élastomère total, c'est-à-dire élastomère blocs tel que SIBS plus tout autre élastomère ou TPE éventuel présent).

En dessous du minimum indiqué, la bande annulaire risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, on préfère que le taux d'huile polybutène soit supérieur à 10 pce, notamment compris entre 10 et 90 pce, plus préférentiellement encore qu'il soit supérieur à 20 pce, notamment compris entre 20 et 80 pce.

La bande annulaire décrite ci-dessus peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes, des agents colorants avantageusement utilisables pour la coloration de la composition, des charges lamellaires améliorant encore l'étanchéité (e.g. des phyllosilicates tels que kaolin, talc, mica, du graphite, des argiles ou argiles modifiées (*"organo clays"*)), des plastifiants autres que les huiles d'extension précitées, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (élastomères blocs tels que SIBS et autres élastomères éventuels) précédemment décrits, la bande annulaire pourrait aussi comporter, toujours selon une fraction pondérale minoritaire par rapport à l'élastomère blocs, des polymères autres que des élastomères, tels que par exemple des polymères thermoplastiques compatibles avec l'élastomère blocs.

La bande annulaire précédemment décrite est un composé solide (à 23°C) et élastique, qui se caractérise notamment, grâce à sa formulation spécifique, par une très haute souplesse et très haute déformabilité.

Selon un mode de réalisation préférentiel de l'invention, cette bande annulaire présente un module sécant en extension, à 10% d'allongement (noté M 10), qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

Selon un mode de réalisation préféré de l'invention, la bande annulaire présente une largeur sensiblement égale à la longueur curviligne dans un plan méridien comprise entre les points radialement les plus extérieurs de chacune des ailes.

Selon cette réalisation préférée de l'invention, la bande annulaire peut être mise en place pour couvrir la surface radialement extérieure de la jante depuis le sommet radialement extérieur d'une aile au sommet de l'autre.

Avantageusement encore selon l'invention, la bande annulaire présente un diamètre sensiblement égal au diamètre du fond de jante. La combinaison des propriétés élastiques et du tack associés à un tel diamètre permet de mettre en place la bande annulaire de sorte qu'elle couvre correctement la surface radialement extérieure de la jante.

Les essais réalisés avec le dispositif ainsi réalisé selon l'invention ont montré que la bande annulaire permet d'obtenir une étanchéité parfaite quel que soit l'état de surface de la jante sur laquelle elle est mise en place. En effet ses propriétés d'étanchéité, sa souplesse et sa faible dureté autorisent une bonne étanchéité malgré la présence d'éventuelles aspérités sur la surface de la jante, ladite bande annulaire venant épouser la surface de la jante.

En outre, le dispositif d'étanchéité selon l'invention est simple à réaliser. Le matériau constituant la bande annulaire peut être extrudé et mis en forme sur un profilé, par exemple plat. La bande ainsi obtenue est découpée à la longueur souhaitée et les deux extrémités sont soudées par tous moyens connus de l'homme du métier tels que des moyens thermiques et/ou chimiques et/ou application d'une dissolution de polymère.

Une variante avantageuse de réalisation de l'invention prévoit que la bande annulaire comprend une deuxième couche d'un matériau thermoplastique radialement intérieure à la couche d'un matériau élastomérique comportant au moins un élastomère thermoplastique copolymère à blocs polystyrène et polyisobutylène, et une huile polybutène. Cette deuxième couche va avantageusement jouer le rôle du ruban de fond de jante, décrit précédemment, qui vient couvrir les orifices répartis sur la périphérie de la jante pour autoriser la fixation des têtes de rayons.

Le matériau thermoplastique est par exemple un polypropylène mélangé à un matériau de type SEBS, SEPS ou SEEPS afin d'obtenir une déformabilité adéquate.

Avantageusement encore, la deuxième couche radialement intérieure présente une largeur inférieure à la longueur curviligne dans un plan méridien comprise entre les points radialement les plus extérieurs de chacune des ailes. Selon une telle réalisation, la deuxième couche apporte une fonction de protection de la première couche à l'égard des orifices de la jante ou bien des têtes de rayon et la deuxième couche radialement intérieure étant plus étroite que la couche d'un matériau élastomérique comportant au moins un élastomère thermoplastique copolymère à blocs polystyrène et polyisobutylène, et une huile polybutène, cette dernière autorisant toujours une mise en place aisée sur la jante par la combinaison de ses propriétés élastiques et de son tack.

Selon cette variante de réalisation de l'invention, le ruban usuellement placé en fond de jante pour protéger la chambre à air de frottements contre les têtes de rayons, les écrous ou les bords des orifices de la jante et qui peut apparaître utile pour protéger dans le cas de l'invention la couche d'un matériau élastomérique comportant au moins un élastomère thermoplastique copolymère à blocs polystyrène et polyisobutylène, et une huile polybutène est associé à ladite couche lors de sa fabrication et peut donc être mis en place simultanément sur la jante. Une telle variante peut donc être plus simple de mise en oeuvre lors de la mise en place du dispositif d'étanchéité sur la jante si un « ruban de protection » apparaît nécessaire.

L'invention propose également un ensemble monté constitué essentiellement d'une roue comprenant une jante et d'un pneumatique tubeless, la jante étant associée à un dispositif d'étanchéité tel que décrit précédemment.

L'ensemble monté selon l'invention est avantageusement constitué d'une roue comprenant une jante non étanche.

L'invention propose encore un procédé de mise en place d'un dispositif d'étanchéité tel que décrit précédemment sur une jante pour une roue prévue pour recevoir un pneumatique, ladite jante étant constituée d'un fond de jante prolongé par deux ailes, la bande annulaire étant étirée élastiquement pour être déposée sur les points radialement les plus extérieurs de chacune des ailes.

Comme expliqué précédemment, les propriétés élastiques permettent d'augmenter le diamètre de la bande qui peut être mise en place aisément en appui sur les points radialement les plus extérieurs de chacune des ailes et le tack de ladite bande lui permet de reprendre partiellement sa taille initiale alors que ses bords restent par frottement sur les ailes de la jante. Par ailleurs, les propriétés hystérétiques relativement élevées de la bande annulaire garantissent un retour à la taille initiale relativement lent qui va permettre de bien positionner la bande annulaire relativement au fond de jante et notamment permettre un bon centrage.

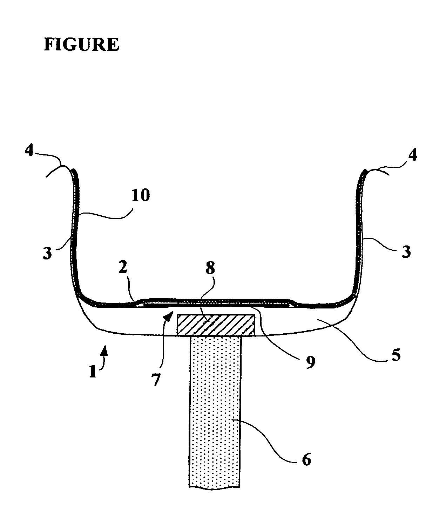

D'autres détails et caractéristiques avantageux de l'invention ressortiront ci-après de la description d'un exemple de réalisation de l'invention en référence à la figure qui représente un schéma d'une vue en coupe radiale d'un schéma d'une jante selon l'invention.

La figure n'est pas représentée à l'échelle pour en simplifier la compréhension.

La figure représente schématiquement un profil en coupe radiale d'une jante 1 pour bicyclette. La jante 1 comprend notamment un fond de jante 2 prolongé latéralement par deux ailes 3. Les extrémités radialement extérieures des ailes 3 comportent encore des crochets 4.

Le fond de jante 2 coiffe une cavité 5 dans laquelle passe les têtes de rayons 6 pour être fixées à la jante 1. le fond de jante présente encore comme expliqué précédemment des orifices 7 permettant d'accéder aux écrous de serrage 8 pour fixer les têtes de rayons.

Un ruban tel qu'une bande thermoplastique ou une couche de renfort textile 9 est déposée sur le fond de jante 2 pour protéger le dispositif d'étanchéité selon l'invention qui vient notamment couvrir le fond de jante 2 comportant les orifices 7 sur lesquelles la bande annulaire 10 constituant le dispositif d'étanchéité pourrait venir frotter et s'abîmer notamment lors de sa mise en place. Comme expliqué précédemment une telle couche de renfort textile est déjà connue pour protéger la chambre à air dans un ensemble monté constitué d'une jante, un pneumatique et une chambre à air.

La bande annulaire 10 formant le dispositif d'étanchéité couvre la surface du fond de jante 2 et s'étend de part et d'autre sur la surface de chacune des ailes 3 en regard l'une de l'autre sensiblement jusqu'à chacun de crochets 4.

La bande annulaire 10 conforme à l'invention est constituée d'un élastomère blocs SIBS ("Sibstar 102T" avec un taux de styrène d'environ 15%, une Tg d'environ - 65°C et une Mn d'environ 90 000 g/mol) étendu avec environ 66 pce d'huile PIB ("Dynapak Poly 190" - Mn de l'ordre de 1000 g/mol).

La bande annulaire est obtenue par extrusion puis déposée sur un intercalaire. La bande ainsi obtenue est découpée à la longueur souhaitée et les deux extrémités sont soudées thermiquement pour former un anneau.

Les propriétés de la bande annulaire 10 ainsi obtenue vont permettre de la mettre en place de manière simple et précise. En effet, ses propriétés élastiques et hystérétiques permettent de l'étirer de la positionner précisément et de la voir prendre place sur le fond de jante 2 de manière précise. Sa composition la rend effectivement facile à déformer et son retour à l'état initial est suffisamment lent pour autoriser un positionnement précis avant que ce retour n'ait lieu. La bande annulaire 10 est ainsi déposée et centrée sur la jante 1 en appui sur le sommet des crochets 4. La bande annulaire 10 présente en outre un état de surface collant qui lui permet lors de son retour à l'état initial de rester au contact des ailes 3 du fait du frottement qui s'exerce entre la bande annulaire 10 et la surface des ailes 3. on obtient finalement comme il apparaît sur la figure une bande annulaire qui s'étend d'une aile à l'autre en couvrant une partie de leurs surfaces et la surface du fond de jante2.

Les propriétés en termes de rigidité permettent en outre d'absorber toutes les irrégularités de surface de la jante 1 et conduit ainsi à une étanchéité complète sans apparition d'aucune micro-fuite comme il peut en exister avec des dispositifs existants comme il l'a été rappelé précédemment.

L'association du dispositif d'étanchéité et de la jante 1 étant effectuée, il est ensuite possible de monter un pneumatique dit « tubeless » sur la jante. La bande annulaire présentant un état de surface collant ou « tack », pour faciliter le montage du pneumatique il est préférable de rendre plus glissante la surface de la bande annulaire 10 sur laquelle le pneumatique doit venir glisser pour se monter. Cet état glissant peut par exemple être obtenu en mettant du talc avant l'étape de montage du pneumatique.

Une autre solution peut consister lors de la réalisation de la bande annulaire à co-extruder celle-ci avec un autre matériau présentant un état de surface non collant et destiné à venir former la surface radialement extérieure de la bande annulaire 10 après montage sur la jante 1. Il peut s'agir par exemple d'une composition à base de polyéthylène, de polypropylène, n'influant pas sur les propriétés de déformabilité de la bande.

Une réalisation d'un dispositif plus complexe est encore envisageable en fabriquant par co-extrusion un dispositif à trois couches comportant une couche centrale correspondant à la bande annulaire décrite ci-dessus, une couche radialement extérieure réalisée avec un matériau présentant un état de surface non collant et une couche radialement intérieure d'un matériau thermoplastique apportant une fonction de protection de la première couche à l'égard des orifices de la jante ou bien des têtes de rayon. La couche radialement intérieure est alors de préférence axialement plus étroite que les autres couches de sorte que l'état de surface collant de la couche centrale permette lors du retour à l'état initial du dispositif, lors de son montage sur la jante, de rester au contact des ailes de la jante du fait du frottement qui s'exerce entre ladite couche centrale et la surface des ailes.

La bande annulaire 10 couvrant la surface du fond de jante 2 pour assurer l'étanchéité de ladite jante 2, il est également nécessaire de prévoir la présence d'une valve devant traverser le fond de jante 2 et la bande annulaire 10 pour permettre le gonflage de l'ensemble monté. Cette valve peut avantageusement être associée à la bande annulaire 10 lors de la fabrication de cette dernière. Elle peut notamment être fixée par soudage lors de la réalisation proprement dite de la bande par soudure des deux extrémités de la bande obtenue après l'étape de découpe du profilé extrudé.

Des essais de montage et de roulage ont été réalisés avec ce type d'ensemble monté dans une dimension VTT 47-559 sur une jante de 559 selon une technologie « tubeless ».

Le montage du dispositif d'étanchéité s'est avéré simple de mise en oeuvre et l'ajout de talc sur la bande annulaire une fois placée sur la jante a rendu le montage du pneumatique tout à fait conforme à un montage usuel.

L'ensemble monté a ensuite été gonflé à 3 bars et conservé 15 jours en statique. La pression mesurée à l'issue de cette période n'avait pas significativement changé.

Des essais en roulage sur route et sur chemin n'ont par ailleurs laissé apparaître aucune défaillance de l'ensemble monté ainsi constitué selon l'invention.

## Revendications

1. Dispositif d'étanchéité formant une bande annulaire destiné à être associé à une jante pour une roue prévue pour recevoir un pneumatique, ladite jante étant constituée d'un fond de jante prolongé par deux ailes, ledit dispositif étant destiné à être mis en place pour couvrir au moins le fond de jante, **caractérisée en ce que** la bande annulaire comprend au moins une couche d'un matériau élastomérique comportant au moins un élastomère thermoplastique copolymère à blocs polystyrène et polyisobutylène, et une huile polybutène.

2. Dispositif selon la revendication 1, **caractérisée en ce** le copolymère blocs est un copolymère styrène/ isobutylène/ styrène (en abrégé "SIBS").

3. Dispositif selon la revendication 1 ou 2, **caractérisée en ce que** le copolymère blocs comprend entre 5 et 50% en masse de styrène.

4. Dispositif selon l'une des revendications 1 à 3, **caractérisée en ce que** la Tg du copolymère blocs est inférieure à - 20°C.

5. Dispositif selon l'une des revendications précédentes, **caractérisée en ce que** la masse moléculaire moyenne en nombre (Mn) du copolymère blocs est comprise entre 30 000 et 500 000 g/mol.

6. Dispositif selon l'une des revendications précédentes, **caractérisée en ce que** l'huile polybutène est une huile polyisobutylène.

7. Dispositif selon l'une des revendications précédentes, **caractérisée en ce que** la masse moléculaire moyenne en nombre (Mn) de l'huile polybutène est comprise entre 200 et 25 000 g/mol.

8. Dispositif selon l'une des revendications précédentes, **caractérisée en ce que** le taux d'huile polybutène est supérieur à 5 pce, de préférence compris entre 5 et 100 pce (pce = parties en poids pour cent parties d'élastomère).

9. Dispositif selon l'une des revendications précédentes, **caractérisée en ce que** la bande annulaire présente une largeur sensiblement égale à la longueur curviligne dans un plan méridien comprise entre les points radialement les plus extérieurs de chacune des ailes.

10. Dispositif selon l'une des revendications précédentes, **caractérisée en ce que** la bande annulaire présente un diamètre sensiblement égal au diamètre du fond de jante.

11. Dispositif selon l'une des revendications précédentes, **caractérisée en ce que** la bande annulaire comprend une deuxième couche d'un matériau thermoplastique radialement intérieure à la couche d'un matériau élastomérique comportant au moins un élastomère thermoplastique copolymère à blocs polystyrène et polyisobutylène, et une huile polybutène.

12. Dispositif selon l'une des revendications précédentes, **caractérisée en ce que** la deuxième couche radialement intérieure présente une largeur inférieure à la longueur curviligne dans un plan méridien comprise entre les points radialement les plus extérieurs de chacune des ailes.

13. Ensemble monté constitué essentiellement d'une roue comprenant une jante et d'un pneumatique « tubeless », la jante étant associée à un dispositif d'étanchéité selon l'une des revendications 1 à 12.

14. Ensemble monté selon la revendication 13, **caractérisé en ce qu**'il est constitué d'une roue comprenant une jante non étanche.

15. Procédé de mise en place d'un dispositif d'étanchéité selon l'une des revendications 1 à 12 sur une jante pour une roue prévue pour recevoir un pneumatique, ladite jante étant constituée d'un fond de jante prolongé par deux ailes **caractérisé en ce que** la bande annulaire est étirée élastiquement et **en ce qu**'elle est déposée sur les points radialement les plus extérieurs de chacune des ailes.

## Claims

1. Sealing device forming an annular band intended to be associated with a rim for a wheel designed to accept a tyre, the said rim consisting of a rim bottom extended by two flanges, the said device being intended to be fitted in such a way as to cover at least the rim bottom, **characterized in that** the annular band comprises at least one layer of an elastomeric material comprising at least one copolymer thermoplastic elastomer containing blocks of polystyrene and polyisobutylene, and a polybutene oil.

2. Device according to Claim 1, **characterized in that** the block copolymer is a styrene/isobutylene/styrene copolymer ("SIBS" for short).

3. Device according to Claim 1 or 2, **characterized in that** the block copolymer contains between 5 and 50 wt% styrene.

4. Device according to one of Claims 1 to 3, **characterized in that** the Tg of the block copolymer is below -20° C.

5. Device according to one of the preceding claims, **characterized in that** the number-average molecular weight (Mn) of the block copolymer is between 30 000 and 500 000 g/mol.

6. Device according to one of the preceding claims, **characterized in that** the polybutene oil is a polyisobutylene oil.

7. Device according to one of the preceding claims, **characterized in that** the number-average molecular weight (Mn) of the polybutene oil is between 200 and 25 000 g/mol.

8. Device according to one of the preceding claims, **characterized in that** the polybutene oil content is above 5 phr, preferably ranging between 5 and 100 phr (where phr stands for parts per hundred rubber).

9. Device according to one of the preceding claims, **characterized in that** the annular band has a width substantially equal to the curvilinear length in a meridian plane contained between the radially outermost points of each of the flanges.

10. Device according to one of the preceding claims, **characterized in that** the annular band has a diameter substantially equal to the diameter of the rim bottom.

11. Device according to one of the preceding claims, **characterized in that** the annular band comprises a second layer of a thermoplastic material radially on the inside of the layer of an elastomeric material comprising at least one copolymer thermoplastic elastomer based on blocks of polystyrene and of polyisobutylene, and a polybutene oil.

12. Device according to one of the preceding claims, **characterized in that** the radially interior second layer has a width smaller than the curvilinear length in a meridian plane contained between the radially outermost points of each of the flanges.

13. Mounted assembly essentially consisting of a wheel comprising a rim and a "tubeless" tyre, the rim being associated with a sealing device according to one of Claims 1 to 12.

14. Mounted assembly according to Claim 13, **characterized in that** it consists of a wheel comprising a rim that is not airtight.

15. Method of fitting a sealing device according to one of Claims 1 to 12 on a rim for a wheel designed to accept a tyre, the said rim consisting of a rim bottom extended by two flanges, **characterized in that** the annular band is stretched elastically and **in that** it is positioned over the radially outermost points of each of the flanges.

## Patentansprüche

1. Dichtungsvorrichtung, die ein ringförmiges Band bildet und die mit einer Felge für ein Rad verbunden werden soll, die zum Aufnehmen eines Reifens vorgesehen ist, wobei die Felge aus einem Felgenbett, das durch zwei Flügel verlängert ist, gebildet ist, wobei die Vorrichtung angebracht werden soll, um zumindest das Felgenbett zu bedecken, **dadurch gekennzeichnet, dass** das ringförmige Band mindestens eine Schicht aus einem elastomeren Material mit mindestens einem thermoplastischen Polystyrol- und Polyisobutylen-Blockcopolymer-Elastomer und einem Polybutenöl umfasst.

2. Vorrichtung nach Anspruch 1, **dadurch gekennzeichnet, dass** das Blockcopolymer ein Styrol/Isobutylen/Styrol-Copolymer (in Kurzform "SIBS"-Copolymer) ist.

3. Vorrichtung nach Anspruch 1 oder 2, **dadurch gekennzeichnet, dass** das Blockcopolymer zwischen 5 und 50 Massen-% Styrol umfasst.

4. Vorrichtung nach einem der Ansprüche 1 bis 3, **dadurch gekennzeichnet, dass** die Tg des Blockcopolymers geringer ist als -20 °C.

5. Vorrichtung nach einem der vorangehenden Ansprüche, **dadurch gekennzeichnet, dass** die zahlenmittlere Molekülmasse (Mn) des Blockcopolymers zwischen 30000 und 500000 g/Mol liegt.

6. Vorrichtung nach einem der vorangehenden Ansprüche, **dadurch gekennzeichnet, dass** das Polybutenöl ein Polyisobutylenöl ist.

7. Vorrichtung nach einem der vorangehenden Ansprüche, **dadurch gekennzeichnet, dass** die zahlenmittlere Molekülmasse (Mn) des Polybutenöls zwischen 200 und 25000 g/Mol liegt.

8. Vorrichtung nach einem der vorangehenden Ansprüche, **dadurch gekennzeichnet, dass** der Prozentsatz an Polybutenöl größer ist als 5 pce, vorzugsweise zwischen 5 und 100 pce liegt (pce = Gewichtsteile pro hundert Elastomerteile).

9. Vorrichtung nach einem der vorangehenden Ansprüche, **dadurch gekennzeichnet, dass** das ringförmige Band eine Breite aufweist, die im Wesentlichen gleich der gekrümmten Länge in einer Meridianebene zwischen den radial äußersten Punkten von jedem der Flügel ist.

10. Vorrichtung nach einem der vorangehenden Ansprüche, **dadurch gekennzeichnet, dass** das ringförmige Band einen Durchmesser aufweist, der im Wesentlichen gleich dem Durchmesser des Felgenbetts ist.

11. Vorrichtung nach einem der vorangehenden Ansprüche, **dadurch gekennzeichnet, dass** das ringförmige Band eine zweite Schicht aus einem thermoplastischen Material radial innerhalb der Schicht aus einem elastomeren Material mit mindestens einem thermoplastischen Polystyrol- und Polyisobutylen-Blockcopolymer-Elastomer und einem Polybutenöl umfasst.

12. Vorrichtung nach einem der vorangehenden Ansprüche, **dadurch gekennzeichnet, dass** die radial innere zweite Schicht eine Breite aufweist, die geringer ist als die gekrümmte Länge in einer Meridianebene zwischen den radial äußersten Punkten von jedem der Flügel.

13. Montierte Baugruppe, die im Wesentlichen aus einem Rad mit einer Felge und einem "schlauchlosen" Reifen besteht, wobei die Felge mit einer Dichtungsvorrichtung nach einem der Ansprüche 1 bis 12 verbunden ist.

14. Montierte Baugruppe nach Anspruch 13, **dadurch gekennzeichnet, dass** sie aus einem Rad mit einer nicht dichten Felge besteht.

15. Verfahren zum Anbringen einer Dichtungsvorrichtung nach einem der Ansprüche 1 bis 12 an einer Felge für ein Rad, die zum Aufnehmen eines Reifens vorgesehen ist, wobei die Felge aus einem Felgenbett, das durch zwei Flügel verlängert ist, gebildet ist, **dadurch gekennzeichnet, dass** das ringförmige Band elastisch gestreckt wird und dass es an den radial äußersten Punkten von jedem der Flügel abgelagert wird.
